# FASCICULE DE BREVET EUROPEEN

(11) **EP 1 553 276 B1**
(45) Date de publication et mention de la délivrance du brevet: **14.03.2007**
(21) Numéro de dépôt: 05100057.8
(22) Date de dépôt: 06.01.2005
(51) Int. Cl.: F02C 7/36, F02K 3/02

(54) **Turbomachine a turbine semi - liée entraînant un récepteur**
Turbomaschine mit einem Rezeptor und einem Niederdruckverdichter von einer Nierderdruckturbine angetrieben
Turboengine with a receptor and a low pressure compressor drived by a low pressure turbine

(30) Priorité: 08.01.2004 FR 0450047
(43) Date de publication de la demande: 13.07.2005
(73) Titulaire: SNECMA, 75015 Paris (FR)
(72) Inventeur: LOISY, Jean, 77310, PONTHIERRY (FR)
(74) Mandataire: Poulin, Gérard

(56) Documents cités:
- EP-A- 0 867 607
- DE-A- 3 933 776
- FR-A- 2 508 552
- GB-A- 1 411 380
- GB-A- 2 377 731
- US-A- 2 583 872

## Description

### DOMAINE TECHNIQUE

La présente invention se rapporte de façon générale à une turbomachine, notamment pour aéronef, et plus spécifiquement à une turbomachine à turbine semi-liée entraînant un récepteur piloté de manière à conserver une vitesse de rotation sensiblement constante, quelle que soit la puissance demandée à cette turbomachine.

### ETAT DE LA TECHNIQUE ANTERIEURE

De l'art antérieur, il est connu de prévoir des turbomachines comportant un compresseur basse pression suivi d'un compresseur haute pression, dans le but d'obtenir des rapports de compression plus élevés que ceux rencontrés avec des turbomachines munies d'un unique compresseur.

De façon connue, ces compresseurs basse pression et haute pression sont entraînés par des turbines successives haute pression et basse pression, ces divers éléments étant respectivement dénommés « compresseur BP », « compresseur HP », « turbine HP » et « turbine BP » dans la suite de la description.

Les deux principaux types de turbomachine à deux compresseurs connus dans l'art antérieur sont tout d'abord les turbomachines dites « à turbine libre », puis les turbomachines dites « à turbine semi-liée ».

Il est noté que dans les turbomachines à turbine libre, le récepteur est entraîné par une troisième turbine ne présentant aucun lien mécanique avec les turbines HP et BP, tandis que dans les turbomachines à turbine semi-liée, le récepteur est entraîné par la turbine BP, au même titre que le compresseur BP. Dans ce dernier cas, classiquement, le compresseur BP est relié directement à la turbine BP par un arbre prévu à cet effet, tandis que le récepteur est généralement entraîné par un système d'engrenages raccordé à cette même turbine BP.

Des turbopropulseurs constituant l'état de la technique sont décrits dans les documents DE 3933776 et EP 0867607.

Habituellement, pour assurer un bon fonctionnement du récepteur, la vitesse de rotation de ce dernier doit être maintenue sensiblement constante, quelle que soit la puissance demandée à cette turbomachine.

A ce titre, il est précisé que les turbomachines à turbine libre acceptent cette condition sans que cela ne provoque de graves dysfonctionnements, dans le sens où leur comportement à puissance partielle reste relativement satisfaisant. Cependant, la présence des trois turbines ainsi que de leurs trois arbres associés nécessite de concevoir des turbomachines complexes et coûteuses, et présentant d'importants problèmes d'encombrement.

D'autre part, il est indiqué que si les turbomachines à turbine semi-liée sont de conception moins complexe que les turbomachines à turbine libre, le maintien du récepteur à vitesse sensiblement constante peut cependant provoquer l'apparition de problèmes non négligeables à puissance partielle.

En effet, lorsque la turbomachine fonctionne à puissance partielle, donc avec un faible débit de carburant, le corps haute pression comportant le compresseur HP et la turbine HP est alors nécessairement ralenti. Or la vitesse de rotation du récepteur, tel qu'une hélice, étant maintenue sensiblement constante, cela implique que la vitesse de rotation du compresseur BP ainsi que celle de la turbine BP sont également maintenues sensiblement constantes. A cet égard, il est précisé que le maintien à une valeur constante de la vitesse de rotation du récepteur peut par exemple être obtenu en diminuant le pas de l'hélice lorsque l'on diminue le débit de carburant, bien entendu dans les cas où le récepteur est constitué d'une hélice à pas variable.

Ainsi, on s'aperçoit qu'à puissance partielle, le corps haute pression ralentit tandis que le compresseur BP tourne toujours à la même vitesse, ce qui engendre inévitablement des risques importants de pompage de ce compresseur BP.

De plus, toujours à basse puissance, on s'aperçoit que la turbine BP est en survitesse aérodynamique, du fait de la diminution de la vitesse du son qui résulte de la baisse des températures, alors que le régime mécanique de cette turbine BP est maintenu constant. Ainsi, la survitesse aérodynamique rencontrée, associée à une diminution de la puissance fournie par la turbomachine, dégrade fortement les rendements de la turbine BP.

Pour faire face à ces risques très élevés de pompage du compresseur BP, il a été proposé de concevoir des stators à calage variable et/ou d'adjoindre des décharges, dans les deux cas afin de diminuer le débit d'air traversant le compresseur HP.

Cependant, ces solutions présentent certaines limites. En effet, au-delà d'un certain angle de fermeture des calages, les aubages ne peuvent plus fonctionner correctement, ce qui se traduit par une difficulté de conception aérodynamique, ainsi que par une limitation de la baisse de débit réalisable à une puissance donnée.

Par ailleurs, une décharge consiste à éjecter de l'air comprimé, ce qui dégrade fortement le rendement de la turbomachine. De plus, la conception et la commande de vannes capables simultanément de tenir de fortes pressions et de passer de grands débits reste très difficile à réaliser. L'installation de ces vannes sur le carter situé entre les deux compresseurs complique également la conception de ce même carter.

Par conséquent, l'ensemble des constatations effectuées ci-dessus met clairement en évidence les limites quant aux possibilités de décharger du débit.

### EXPOSÉ DE L'INVENTION

L'invention a donc pour but de proposer une turbomachine à turbine semi-liée, notamment pour aéronef, entraînant un récepteur piloté de manière à conserver une vitesse de rotation sensiblement constante, ladite turbomachine remédiant aux inconvénients mentionnés ci-dessus relatifs aux réalisations de l'art antérieur.

Pour ce faire, l'invention a pour objet une turbomachine à turbine semi-liée, notamment pour aéronef, entraînant un récepteur piloté de manière à conserver une vitesse de rotation sensiblement constante, la turbomachine disposant d'un compresseur HP, d'une chambre annulaire de combustion, d'une turbine HP ainsi que d'une turbine BP, celle-ci entraînant, notamment par l'intermédiaire d'un système d'engrenages, d'une part le récepteur et d'autre part le compresseur BP. Selon l'invention, le système d'engrenages comporte un répartiteur de couple maintenant un rapport constant entre le couple d'entraînement du récepteur transmis par ledit système d'engrenages, et le couple d'entraînement du compresseur BP transmis par ce même système d'engrenages.

Avantageusement, il est noté qu'à puissance partielle, le répartiteur de couple prévu sur la turbomachine selon l'invention permet d'engendrer une diminution significative de la vitesse de rotation du compresseur BP, tout en maintenant la vitesse de rotation du récepteur sensiblement constante.

En effet, cela s'explique par le fait que lorsque l'on diminue la puissance absorbée par le récepteur, sa vitesse de rotation étant maintenue constante, on diminue nécessairement le couple d'entraînement qui lui est transmis. La présence du répartiteur de couple implique alors que le couple d'entraînement transmis au compresseur BP diminue dans les mêmes proportions, ce qui a pour conséquence de provoquer une diminution de la vitesse de rotation de ce même compresseur BP.

De cette manière, il est noté que le fait de prévoir un répartiteur de couple supprime totalement les risques de pompage du compresseur BP, sans nécessairement avoir recours à des stators à calage variable et/ou à l'adjonction de décharges.

D'autre part, à puissance partielle, la présence du répartiteur de couple génère une diminution de la vitesse de rotation de la turbine BP. Cela s'explique par le fait que le répartiteur de couple impose non seulement une relation de proportionnalité entre les couples transmis d'une part au récepteur et d'autre part au compresseur BP, mais impose également une relation entre leurs vitesses de rotation respectives, qui est telle que lorsque la vitesse de rotation du compresseur BP diminue alors que la vitesse de rotation du récepteur reste sensiblement constante, elle entraîne, dans de proportions plus faibles, une baisse de la vitesse de rotation de la turbine BP. Naturellement, cela permet de diminuer les survitesses aérodynamiques de cette dernière, et donc d'atténuer la dégradation des rendements de cette même turbine BP.

De préférence, le système d'engrenages dispose d'une entrée, de préférence unique, solidaire d'un arbre de turbine BP, ainsi que d'une première et d'une seconde sorties, la première sortie étant solidaire d'un arbre de compresseur BP et la seconde sortie étant solidaire d'un arbre de récepteur. Ainsi, le récepteur est entraîné uniquement par l'arbre de turbine BP par l'intermédiaire du système d'engrenages remplissant alors un rôle de réducteur, et assurant le rapport constant entre le couple d'entraînement du récepteur et le couple d'entraînement du compresseur BP. Il est donc à comprendre que c'est la puissance d'un unique arbre de turbine BP qui est partagée entre le récepteur et ce même compresseur BP.

De plus, cette turbomachine comporte en outre un arbre de turbine HP solidaire de la turbine HP et du compresseur HP.

En outre, il est noté que lorsque le compresseur BP est uniquement entraîné par l'intermédiaire du répartiteur de couple depuis la turbine BP, la baisse engendrée de la vitesse de rotation de ce compresseur BP peut parfois être trop importante, et provoquer alors une dégradation des rendements de ce compresseur BP. Ainsi, pour faire face à ce problème et selon un mode de réalisation préféré de la présente invention, on peut prévoir que la turbomachine comporte également une turbine intermédiaire agencée entre la turbine HP et la turbine BP, et que cette turbine intermédiaire est reliée solidairement au compresseur BP à l'aide d'un arbre de turbine intermédiaire.

Dans une telle configuration, le compresseur BP n'est donc plus exclusivement entraîné par la turbine BP, mais également par cette turbine intermédiaire. Par conséquent, puisqu'une partie seulement du couple d'entraînement global du compresseur BP est proportionnel au couple absorbé par le récepteur, la baisse de la vitesse de rotation du compresseur BP est moins marquée à puissance partielle, et les rendements de celui-ci en sont ainsi sensiblement optimisés.

Préférentiellement, le répartiteur de couple comprend un porte satellite relié à l'entrée du système d'engrenages et portant une pluralité de pignons satellites, ceux-ci s'engrenant d'une part avec un pignon planétaire relié à la première sortie du système d'engrenages, et d'autre part avec une couronne dentée reliée à la seconde sortie du système d'engrenages.

Enfin, on peut prévoir que le récepteur est un élément pris parmi le groupe constitué d'une hélice à pas variable, d'un Prop-Fan (hélice transsonique) à pas variable, d'un doublet d'hélices contrarotatives, d'un doublet de Prop-Fan contrarotatives à pas variables, d'un rotor d'hélicoptère, et d'un alternateur. Bien entendu, d'autres récepteurs sont envisageables, la seule condition étant qu'ils puissent être pilotés de manière à conserver une vitesse de rotation sensiblement constante, quelle que soit la puissance développée par la turbomachine.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en demi-coupe longitudinale d'une turbomachine à turbine semi-liée, selon un premier mode de réalisation préféré de la présente invention ;
- la figure 2 représente une vue en demi-coupe longitudinale illustrant grossièrement le principe d'un système d'engrenages destiné à équiper la turbomachine de la figure 1 ;
- la figure 3 représente une vue détaillée en demi-coupe longitudinale d'un système d'engrenages destiné à équiper la turbomachine de la figure 1 ; et
- la figure 4 représente une vue schématique en demi-coupe longitudinale d'une turbomachine à turbine semi-liée, selon un second mode de réalisation préféré de la présente invention.

### EXPOSÉ DÉTAILLÉ DE MODES DE RÉALISATION PRÉFÉRÉS

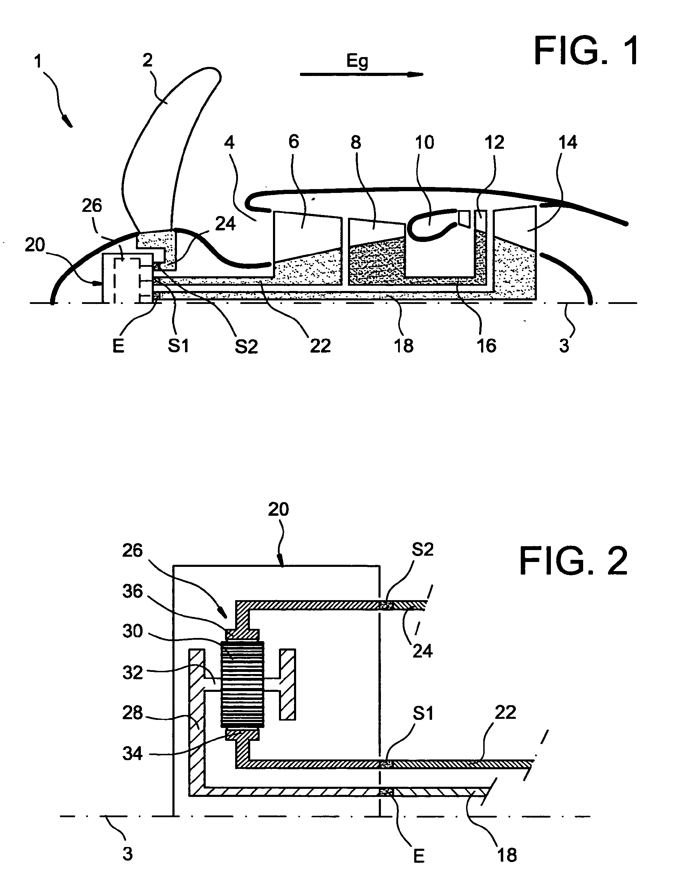

En référence à la figure 1, il est représenté une turbomachine 1 à turbine semi-liée, notamment pour aéronef, selon un premier mode de réalisation préféré de la présente invention.

La turbomachine 1 comprend d'amont en aval, dans une direction principale d'écoulement des gaz à travers cette dernière schématisée par une flèche référencée Eg et parallèle à un axe principal longitudinal 3 de la turbomachine 1, une entrée d'air annulaire 4, un compresseur BP 6, un compresseur HP 8, une chambre de combustion 10, une turbine HP 12, et une turbine BP 14. Comme on peut le voir sur cette figure 1, la turbomachine 1 entraîne un récepteur 2 agencé en amont de l'entrée d'air 4, et piloté de manière à conserver une vitesse de rotation sensiblement constante quelle que soit la puissance demandée à cette turbomachine 1, le récepteur 2 étant de préférence du type hélice à pas variable.

Un corps haute pression de la turbomachine 1 est formé par le compresseur HP 8 et la turbine HP 12, ces deux éléments étant reliés solidairement à l'aide d'un arbre de turbine HP 16.

D'autre part, un corps basse pression de la turbomachine 1 est formé par le compresseur BP 6 et la turbine BP 14. A ce titre, il est noté que la turbine BP 14 entraîne d'une part le compresseur BP 6 et d'autre part l'hélice à pas variable 2, par l'intermédiaire conjointement d'un arbre de turbine BP 18 et d'un système d'engrenages 20.

Pour ce faire, l'arbre de turbine BP 18 est solidaire d'une entrée E du système d'engrenages 20, ce dernier comportant également une première sortie S1 solidaire d'un arbre de compresseur BP 22, ainsi qu'une seconde sortie S2 solidaire d'un arbre de récepteur 24.

La particularité de cette invention réside dans le fait que le système d'engrenages 20 comporte un répartiteur de couple 26 maintenant un rapport constant entre le couple d'entraînement du récepteur 2 transmis par le système d'engrenages 20 et le couple d'entraînement du compresseur BP 6 transmis par ce même système d'engrenages 20.

De cette manière, à puissance partielle et donc lorsque le pas de l'hélice 2 à été diminué, le répartiteur de couple 26 permet alors d'engendrer une diminution significative de la vitesse de rotation du compresseur BP 6, tout en maintenant la vitesse de rotation de cette hélice 2 sensiblement constante. Ainsi, on peut observer une suppression totale des risques de pompage de ce compresseur BP 6.

Comme on peut le voir plus précisément sur la figure 2 illustrant grossièrement le principe du système d'engrenages 20 employé, ce dernier est globalement constitué du répartiteur de couple 26, qui va être exposé en détails ci-dessous.

Ce répartiteur de couple 26 est muni d'un porte satellite 28 centré sur l'axe principal longitudinal 3 de la turbomachine 1, et solidaire de l'entrée E du système d'engrenages 20, donc solidaire de l'arbre de turbine BP 18. Le porte satellite 28 porte une pluralité de pignons satellites 30, chacun étant prévu pour tourner autour d'un axe associé 32 du porte satellite 28, chaque axe 32 étant disposé parallèlement à l'axe principal longitudinal 3.

Les pignons satellites 30 s'engrènent avec un pignon planétaire 34 centré sur l'axe principal longitudinal 3, et solidaire de la première sortie S1 du système d'engrenages 20, donc solidaire de l'arbre de compresseur BP 22. En outre, les pignons satellites 30 s'engrènent aussi avec une couronne dentée 36 également centrée sur l'axe principal longitudinal 3, et solidaire de la seconde sortie S2 du système d'engrenages 20, donc solidaire de l'arbre de récepteur 24.

Il est précisé que ce principe du système d'engrenages 20 est donnée à titre illustratif, afin de faciliter la compréhension du fonctionnement du répartiteur de couple 26. Néanmoins, le système d'engrenages à adopter sera muni d'un ou plusieurs réducteurs couplés à ce répartiteur 26, afin que les rapports de vitesses de rotation des divers éléments connectés à l'entrée E et aux sorties S1 et S2 puissent être facilement respectés.

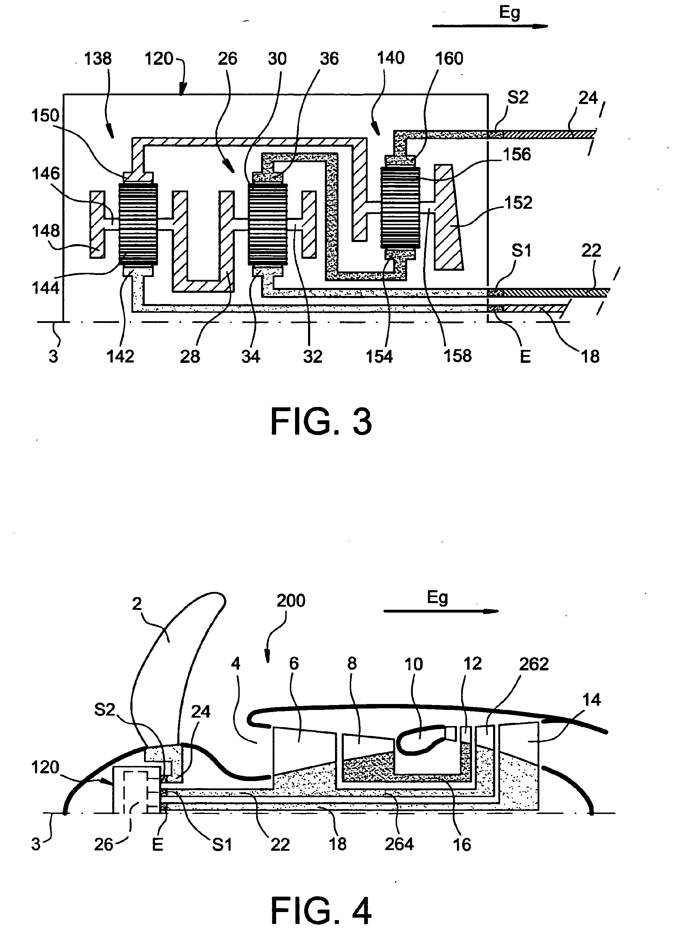

A ce titre, en référence à la figure 3, il est représenté un système d'engrenages 120, ce dernier étant tout à fait adapté pour équiper la turbomachine 1 selon l'invention.

Ce système d'engrenages 120 est pourvu d'amont en aval dans la direction principale d'écoulement des gaz Eg, d'un réducteur épicycloïdal 138, du répartiteur de couple 26, et d'un réducteur planétaire 140.

Le réducteur épicycloïdal 138 comporte un pignon planétaire 142 centré sur l'axe principal longitudinal 3 de la turbomachine 1 et s'engrenant avec une pluralité de pignons satellites 144, ce pignon planétaire 142 étant solidaire de l'entrée E, et donc solidaire de l'arbre de turbine BP 18. Par ailleurs, les pignons satellites 144 sont respectivement portés par des axes 146 parallèles à l'axe principal longitudinal 3 et faisant partie intégrante d'un porte satellite 148 du réducteur épicycloïdal 138. De plus, ces pignons satellites 144 s'engrènent d'autre part avec une couronne dentée 150 du réducteur épicycloïdal 138, cette couronne dentée 150 étant solidaire d'une structure 152 remplissant la fonction de porte satellite du réducteur planétaire 140, comme cela est clairement représenté sur la figure 3.

Le porte satellite 148 du réducteur épicycloïdal 138 est solidaire du porte satellite 28 du répartiteur de couple 26, et a donc pour fonction d'entraîner ce dernier. Il est noté que le répartiteur de couple de ce système d'engrenages 120 présente une conception sensiblement identique de celle du répartiteur de couple du système d'engrenages 20 exposé ci-dessus. A cet effet, comme mentionné précédemment, le porte satellite 28 porte une pluralité de pignons satellites 30, chacun étant prévu pour tourner autour d'un axe associé 32 du porte satellite 28.

Les pignons satellites 30 s'engrènent avec le pignon planétaire 34 centré sur l'axe principal longitudinal 3, et solidaire de la première sortie S1, et donc solidaire de l'arbre de compresseur BP 22. En outre, les pignons satellites 30 s'engrènent aussi avec la couronne dentée 36 également centrée sur l'axe principal longitudinal 3, et solidaire d'un pignon planétaire 154 du réducteur planétaire 140.

Ce pignon planétaire 154 du réducteur planétaire 140 s'engrène avec une pluralité de pignons satellites 156 aptes à tourner autour d'axes 158 faisant partie intégrante de la structure 152 constituant le porte satellite du réducteur planétaire 140. Enfin, ces pignons satellites 156 s'engrènent aussi avec une couronne dentée 160 du réducteur planétaire 140, également centrée sur l'axe principal longitudinal 3, et solidaire de la seconde sortie S2 du système d'engrenages 120, donc solidaire de l'arbre de récepteur 24.

En référence à la figure 4, il est représenté une turbomachine 200 à turbine semi-liée, notamment pour aéronef, selon un second mode de réalisation préféré de la présente invention.

La turbomachine 200 comprend d'amont en aval, dans la direction principale d'écoulement des gaz Eg, une entrée d'air annulaire 4, un compresseur BP 6, un compresseur HP 8, une chambre de combustion 10, une turbine HP 12, une turbine intermédiaire 262, et une turbine BP 14. Comme on peut le voir sur cette figure 4, la turbomachine 200 entraîne un récepteur 2 agencé en amont de l'entrée d'air 4, et piloté de manière à conserver une vitesse de rotation sensiblement constante quelle que soit la puissance demandée à cette turbomachine 200, le récepteur 2 étant de préférence du type hélice à pas variable.

De plus, toujours de la même façon que précédemment, la turbomachine 200 comporte un système d'engrenages 120, muni d'un répartiteur de couple 26 maintenant un rapport constant entre le couple d'entraînement du récepteur 2 transmis par le système d'engrenages 120 et le couple d'entraînement du compresseur BP 6 transmis par ce même système d'engrenages 120.

Ainsi, la différence principale entre la turbomachine 1 selon le premier mode de réalisation préféré et la turbomachine 200 selon le second mode de réalisation préféré réside dans le fait que dans cette dernière, la turbine intermédiaire 262 participe à l'entraînement du compresseur BP 6 à l'aide d'un arbre de turbine intermédiaire 264, celui-ci étant donc aussi solidaire de l'arbre de compresseur BP 22.

A ce titre, il est indiqué que la turbine intermédiaire 262 est dimensionnée de manière à ne fournir seulement qu'une partie de la puissance absorbée par le compresseur BP 6, l'autre partie étant bien entendu délivrée par la turbine BP 14 et transmise par l'intermédiaire du répartiteur de couple 26. De cette manière, puisqu'une partie seulement du couple d'entraînement global du compresseur BP 6 est proportionnel au couple absorbé par l'hélice 2, la baisse de la vitesse de rotation du compresseur BP 6 est moins marquée à bas régime, et les rendements de celui-ci en sont ainsi sensiblement optimisés.

Naturellement, le principe du système d'engrenages prévu sur cette turbomachine 200, et indiqué par la référence numérique 120, peut être similaire au principe du système d'engrenages 120 décrit ci-dessus en relation avec la turbomachine 1 selon le premier mode de réalisation préféré de la présente invention, mais il réalise bien entendu des rapports différents.

Bien entendu, diverses modifications peuvent être apportées par l'homme du métier aux turbomachines pour aéronef 1 et 200 qui viennent d'être décrites, uniquement à titre d'exemples non limitatifs.

## Revendications

1. Turbomachine (1,200) à turbine semi-liée pour aéronef, entraînant un récepteur (2) piloté de manière à conserver une vitesse de rotation sensiblement constante, ladite turbomachine disposant d'un compresseur BP (6), d'un compresseur HP (8), d'une chambre annulaire de combustion (10), d'une turbine HP (12) ainsi que d'une turbine BP (14), celle-ci entraînant, notamment par l'intermédiaire d'un système d'engrenages (20,120), d'une part ledit récepteur (2) et d'autre part ledit compresseur BP (6), **caractérisée en ce que** le système d'engrenages (20,120) comporte un répartiteur de couple (26) maintenant un rapport constant entre le couple d'entraînement du récepteur (2) transmis par le système d'engrenages (20,120) et le couple d'entraînement du compresseur BP (6) transmis par ce même système d'engrenages (20,120).

2. Turbomachine (1,200) selon la revendication 1, **caractérisée en ce que** ledit système d'engrenages (20,120) dispose d'une entrée (E) solidaire d'un arbre de turbine BP (18), ainsi que d'une première et d'une seconde sorties (S1,S2), ladite première sortie (S1) étant solidaire d'un arbre de compresseur BP (22) et ladite seconde sortie (S2) étant solidaire d'un arbre de récepteur (24).

3. Turbomachine (1,200) selon la revendication 2, **caractérisée en ce qu'**elle comporte en outre un arbre de turbine HP (16) solidaire de ladite turbine HP (12) et dudit compresseur HP (8).

4. Turbomachine (200) selon la revendication 2 ou la revendication 3, **caractérisée en ce qu**'elle comporte également une turbine intermédiaire (262) agencée entre ladite turbine HP (12) et ladite turbine BP (14), et en ce que ladite turbine intermédiaire (262) est reliée solidairement au compresseur BP (6) à l'aide d'un arbre de turbine intermédiaire (264).

5. Turbomachine (1,200) selon l'une quelconque des revendications 2 à 4, **caractérisée en ce que** ledit répartiteur de couple (26) comprend un porte satellite (28) relié à l'entrée (E) du système d'engrenages (20,120) et portant une pluralité de pignons satellites (30), ceux-ci s'engrenant d'une part avec un pignon planétaire (34) relié à la première sortie (S1) du système d'engrenages (20,120), et d'autre part avec une couronne dentée (36) reliée à la seconde sortie (S2) du système d'engrenages (20,120).

6. Turbomachine (1,200) selon l'une quelconque des revendications précédentes, **caractérisée en ce que** ledit récepteur (2) est un élément pris parmi le groupe constitué d'une hélice à pas variable, d'un Prop-Fan à pas variable, d'un doublet d'hélices contrarotatives, d'un doublet de Prop-Fan contrarotatives à pas variables, d'un rotor d'hélicoptère, et d'un alternateur.

## Claims

1. Turbine engine (1,200) with a semi-fixed turbine for aircraft, driving a receiver controlled (2) so as to preserve a roughly constant rotation speed, the turbine engine with an LP compressor (6), an HP compressor (8), a combustion annulus (10), an HP turbine (12) and an LP turbine (14) which, particularly via a gear system (20,120), drives the receiver (2) and the LP compressor (6), **characterised by** the fact the gear system (20,120) has a torque control system (26) maintaining a constant ratio between the driver torque of the receiver (2) transmitted by the gear system (20,120) and the driver torque of the LP compressor (6) transmitted by this same gear system (20,120).

2. Turbine engine (1,200) according to claim 1, characteristed by the fact that the gear system (20,120) has an inlet (E) integral with an LP turbine shaft(18) as well as first and second outlets (S1, S2) , the first outlets (S1) being integral with an LP compressor shaft (22) and the second outlet (S2) being integral with a receiver shaft (24).

3. Turbine engine (1,200) according to claim 2, **characterised by** the fact that it also has an HP turbine shaft (16) integral with the HP turbine shaft (12) and the HP compressor (8).

4. Turbine engine (200) according to claim 2 or claim 3, **characterised by** the fact that it also has an intermediate turbine (262) arranged between the HP turbine (12) and the LP turbine(14), and by the fact that the intermediate turbine (262) is connected integrally with the LP compressor (6) using an intermediary turbine shaft (264).

5. Turbine engine (1,200) according to any of claims 2 to 4, **characterised by** the fact that the torque control system (26) has a satellite carrier (28) connected to the entrance (E) of the gear systems (20,120) and with a multiplicity of satellite pinions (30) engaging with a planetary pinion (34) linked to the first outlet (S1) of the gear system (20,120) and with a crown gear (36) connected to the second outlet (S2) of the gear system (20,120).

6. Turbine engine (1,200) according to any of the preceding claims **characterised by** the fact that the receiver (2) is an element taken from the group made up of a variable pitch propeller, a variable pitch Prop-Fan, a counter-rotary propeller doublet, a counter-rotary variable pitch Prop-Fan doublet, a helicopter rotor and an alternator.

## Patentansprüche

1. Turbotriebwerk (1, 200) mit halb-verbundener Turbine für Luftfahrzeuge, das einen Rezeptor (2) antreibt, der dergestalt gesteuert ist, dass er eine im Wesentlichen konstante Drehgeschwindigkeit bewahrt, wobei dieses Turbotriebwerk einen Niederdruckverdichter (6), einen Hochdruckverdichter (8), eine ringförmige Brennkammer (10), eine Hochdruckturbine (12) sowie eine Niederdruckturbine (14) aufweist, wobei diese insbesondere über ein Getriebesystem (20, 120) einerseits diesen Rezeptor (2) und andererseits diesen Niederdruckverdichter (6) antreibt,
**dadurch gekennzeichnet,**
**dass** das Getriebesystem (20, 120) einen Differentialwandler (26) enthält, der ein konstantes Verhältnis zwischen dem Antriebsmoment des Rezeptors (2), das durch das Getriebesystem (20, 120) übertragen wird, und dem Antriebsmoment des Niederdruckverdichters (6), das durch das gleiche Getriebesystem (20, 120) übertragen wird, bewahrt.

2. Turbotriebwerk (1, 200) nach Anspruch 1,
**dadurch gekennzeichnet,**
**dass** dieses Getriebesystem (20, 120) einen Antrieb (E), der fest mit einer Niederdruckturbinenwelle (18) verbunden ist, sowie einen ersten und einen zweiten Abtrieb (S1, S2) aufweist, wobei dieser erste Abtrieb (S1) fest mit einer Niederdruckverdichterwelle (22) und dieser zweite Abtrieb (S2) fest mit einer Rezeptorwelle (24) verbunden ist.

3. Turbotriebwerk (1, 200) nach Anspruch 2,
**dadurch gekennzeichnet,**
**dass** es ferner eine Hochdruckturbinenwelle (16) aufweist, die fest mit der Hochdruckturbine (12) und dem Hochdruckverdichter (8) verbunden ist.

4. Turbotriebwerk (200) nach Anspruch 2 oder 3,
**dadurch gekennzeichnet,**
**dass** es auch eine Zwischenturbine (262) aufweist, die zwischen der Hochdruckturbine (12) und der Niederdruckturbine (14) angebracht ist, und dass diese Zwischenturbine (262) mittels einer Zwischenturbinenwelle (264) fest mit dem Niederdruckverdichter (6) verbunden ist.

5. Turbotriebwerk (1, 200) nach einem der Ansprüche 2 bis 4,
**dadurch gekennzeichnet,**
**dass** der Differentialwandler (26) einen Planetenradträger (28) umfasst, der mit dem Eingang (E) des Getriebesystems (20, 120) verbunden ist und eine Vielzahl von Planetenrädem (30) trägt, die einerseits mit einem Planetenrad (34), das mit dem ersten Abtrieb (S1) des Getriebesystems (20, 120) verbunden ist, und andererseits mit einem Zahnkranz (36), der mit dem zweiten Abtrieb (S2) des Getriebesystems (20, 120) verbunden ist, in Eingriff sind.

6. Turbotriebwerk (1, 200) nach einem der vorherigen Ansprüche,
**dadurch gekennzeichnet,**
**dass** der Rezeptor (2) ein Bauelement ist, das unter den folgenden Elementen ausgewählt wird: einer Verstellluftschraube, einem verstellbaren Prop-Fan, einem Paar entgegengesetzt drehender Schrauben, einem Paar entgegengesetzt drehender verstellbarer Prop-Fan, einem Helikopter-Rotor und einem Generator.
